Europäisches Patentamt

European Patent Office

Office européen des brevets

(11) Publication number: **0 422 740 A2**

# EUROPEAN PATENT APPLICATION

(21) Application number: 90202682.2

(51) Int. Cl.5: **B01D 46/02**

(22) Date of filing: 09.10.90

(30) Priority: 09.10.89 BE 8901086

(43) Date of publication of application:
17.04.91 Bulletin 91/16

(84) Designated Contracting States:
DE FR GB NL

(71) Applicant: **Wulbrecht, Hendrik**
**Doornroosjestraat 5**
**B-8770 Ingelmunster(BE)**

(72) Inventor: **Wulbrecht, Hendrik**
**Doornroosjestraat 5**
**B-8770 Ingelmunster(BE)**

(74) Representative: **Dopchie, Jean-Marc**
**KORTRIJKS OCTROOI- EN MERKENBUREAU**
**BVBA - K.O.B. Kennedypark 21c**
**B-8500 Kortrijk(BE)**

(54) flue gas filter with velocity-reducing chamber and cleaning unit for the filter cloth.

(57) Flue gas filter equipped with a filter space which forms a velocity-reducing chamber for the flue gases, to be provided by a partition which makes a small flow space suddenly merge into a larger flow space, in which the flue gases have to describe a bend, while an opening is provided at the bottom, and a bypass valve at the top, and at least one vibrating motor resting on an outward-projecting bar resting on the suspension frame for the filter cloth ensures cleaning of the filter cloth.

FIGUUR 1

EP 0 422 740 A2

## FLUE GAS FILTER WITH VELOCITY-REDUCING CHAMBER AND CLEANING UNIT FOR THE FILTER CLOTH.

The filtering of flue gases involves arresting the highly polluting dust particles being carried along by these flue gases, on their way between the plant producing said flue gases and the outside air, so that they are not pushed out together with the flue gases through the chimney and reach the environment. A flue gas filter is thus streamed through continuously by the flue gases, which are propelled by a fan, in order to overcome the pressure loss caused by the filter.

The importance of a flue gas filter, as regards the reduction of environmental pollution by industry, is consequently very great. It can even safely be said that their use has become an urgent necessity in many industrial zones, if the health of human beings living and working in the surrounding areas and even the continued existence of the entire surrounding environment (plants and animals) are not to be jeopardized. Binding standards and laws have consequently been drafted, in order to restrict the maximum quantity of polluting constituents which may be released into the air by industry.

On the one hand, the industries producing polluting flue gases are in this way duty bound to ensure that they do not jeopardize human health and the preservation of the whole environment. This is a duty which is more and more becoming an obligation, considering the laws and standards relating to the environment (and the pressure exerted by environmentalist organizations and press reporting) which as an extreme measure provide for the shutdown of the business.

But, on the other hand, a good entrepreneur is always concerned with the profitability of his business. From this point of view, the filtration of flue gases in fact means a financial loss in the eyes of many entrepreneurs (purchase of filters, time taken for maintenance, energy consumption), since these are costs where the result does not contribute to profits.

According to the known state of the art, the filtration of flue gases takes place by means of a flue gas filter made up as follows: Connecting to a flue gas-producing plant (e.g. a furnace), provision is made for a space in which a particular area of filter cloth is placed in such a way that the flowing flue gases have to flow through the filter cloth in order to reach the other connection of the filter leading to the chimney. The flue gases are thus carried out of the flue gas-producing plant (propelled by a fan in order to overcome the pressure loss caused by the filter cloth) to the filter inlet, and move through the filter cloth provided in the filter to the filter outlet, which is connected to the chimney. The flue gases are blown directly against the filter cloth in this case and pass through it, while the polluting dust particles which were in said flue gases are arrested and remain behind on the filter cloth. In order to obtain a large enough surface area of filter cloth without obtaining inordinately large dimensions of the filter, the cloth is not simply placed in a plane at right angles to the direction of flow of the flue gases, but provision is therefore made, still according to the known state of the art, for other arrangements of the filter cloth, two examples of which are cited in what follows.

A first arrangement of the filter cloth is one in which the cloth is placed in a number of cylindrical shapes lying parallel and next to each other, parallel to the flue gas flow. The flue gases then flow through the cylindrical surfaces made up of filter cloth to the open top face of the cylinders, which are then connected to the filter outlet, while the polluting dust particles remain behind on the filter cloth.

A second arrangement of the filter cloth is where the filter cloth is placed in an adequate number of planes parallel to each other and parallel to the flue gas flow direction. The flue gases then flow through the different planes made up of filter cloth and further between these planes, parallel thereto, in the direction of apertures which are provided between the planes and are connected to the filter outlet, while the polluting dust particles remain behind on the filter cloth.

A whole series of disadvantages arise from the fact that the flue gases and the polluting dust particles therein are blown directly at great velocity against the filter cloth.

A first disadvantage is that a layer of caked dust particles is very soon obtained all over the surface of the filter cloth, so that, on the one hand, the filter cloth has to be cleaned (or replaced) very regularly and, on the other, a greater pressure loss has to be contended with, owing to the fact that the stream of flue gases has to be propelled through a filter cloth covered with a layer of dust particles. The result of this is that a more powerful fan has to be provided, which then results in a higher purchase price and a higher energy consumption. These disadvantages have such an effect on the efficiency and the user-friendliness of the flue gas filter that they have to be partially solved by providing a large surface area of filter cloth, so that the layer of dust particles remaining behind on the filter cloth in the same period is spread over a larger surface and is thus thinner, as a result of which the time duration between two necessary cleaning operations is increased slightly, and the pressure loss to be overcome decreases to a certain extent. The result of this is that, in addition to these disadvantages, which still exist, additional disadvantages appear, namely the consequent large dimensions which the filter acquires, on the one hand, and the large surface area of filter cloth needed, on the other, which means that in both cases the cost of a flue gas filter soars.

The need for carrying out a regular cleaning operation on the filter cloth, because otherwise the pressure loss would be too great, produces other disadvantages as well.

According to the known state of the art, it is in fact customary for such cleaning to be carried out by one of the following two methods, each of which results in one or more disadvantages of the known flue gas filters.

A first method for cleaning the filter cloth involves blowing compressed air through the filter cloth in the opposite direction to that of the direction of flow of the flue gases. A first disadvantage of this is that at that moment the part of the filter cloth being cleaned is not serving as a filter, because too great counterpressure for the flue gases is being produced by the compressed air. A second disadvantage of this method lies in the fact that, due to the arrangement of the filtering surfaces parallel to the direction of flow of the flue gases, during blowing from the outflow openings for the flue gas, sufficient pressure is obtained on the surfaces of the filter cloth nearest by but, since the cloth is allowing through the compressed air, a smaller and smaller pressure is obtained the further away one goes from the blowing device. The consequence is that at the end furthest away from the filtering surfaces the pressure obtained is no longer sufficient to blow the layer of dust particles off them. Providing greater compressed air presssure is apparently not possible due to the risk of damaging the filter cloth surfaces lying closest to the blowing device which would be exposed to this pressure. With this method, certain parts of the filter cloth therefore remain uncleaned, and the effective surface of the filter cloth is reduced, with a slight loss in pressure. This method is consequently not very effective, so that the second method described below (with a different disadvantage) often has to be applied in order to obtain complete cleaning.

A second method for cleaning the filter cloth is to shut down the flue gas-producing plant completely so that the filter can be entered in order to carry out the cleaning manually.

The major disadvantage of this is that the plant is inoperative for a certain period of time, and continuity of the production is rendered impossible.

In order to avoid the situation where the filter unit - the dust cloth - has to be cleaned or replaced already after a short time, through the fact that it is covered with a caked layer of dust particles, which causes great pressure loss, a known flue gas filter -described in DE-OS-3805718 - provides for a device for separating the largest dust particles from the flue gas before this flue gas is conveyed to the actual filter unit.

This flue gas filter is more particularly characterized in that it is equipped with a pre-cleaner. The pre-cleaner is composed of thin plates disposed parallel to each other, and these thin plates can be U-shaped, V-shaped or Z-shaped and can be disposed in such a way that the gas flow is allowed through between gaps between said plates after one or more deflections of the gas flow against the plate walls. This pre-cleaner covers the actual filter unit completely by extending over the entire height and width of the filter chamber and separating off a preliminary chamber from said filter chamber. This pre-cleaner not only ensures a separation of the largest dust particles, but also produces a more uniform flow through the filter element.

The disadvantage of this type of flue gas filter with pre-cleaner lies in the fact that an additional resistance is placed in the path which the gas flow has to take. This produces a pressure loss which has to be compensated for by providing a more powerful fan. This results in a higher energy consumption and a higher purchase price for the flue gas filter.

In another known flue gas filter - described in DE-OS-25 36 568 - a separation of the largest dust particles is also produced before the flue gas reaches the filter element. From the horizontal supply chamber the flue gas is conveyed downwards through a narrowed part to the filter chamber, where it describes a bend back upwards in the direction of the filter element.

The disadvantage here is that the narrowed part means an additional resistance for the flue gas, with the result that a more powerful fan is needed.

The object of the invention is to provide a flue gas filter which eliminates all these disadvantages.

The subject of the invention is a flue gas filter characterized in that it is provided with a cleaning unit for cleaning the filter cloth, by means of a vibrating mechanism which can operate continuously if desired, said vibrating mechanism comprising at least one horizontal bar running laterally through the wall of the filter and connected to the frame from which the filter cloth is suspended, on which bar a vibrating motor is placed. The above-mentioned frame, from which the filter cloth with surfaces running vertically is suspended, is suspended here from at least one spring, or similar device, which maintains and/or reinforces the vibrating movement.

The flue gas filter according to the invention is also characterized in that it comprises a space which has an inlet opening for the flue gases, which inlet opening opens into a part of the filter space which is shut off from the remainder of the filter space by means of a partition, while the section of said space is considerably greater than the section of the inlet opening and the supply pipe connected thereto, and the partition does not divide the filter space over the full height.

The flue gas filter is also characterized in that the part of the filter space along the other side of the partition has a much greater section, while the fact that the partition ends at the bottom means that the two parts of the filter space are connected to each other.

The flue gas filter according to the invention is also characterized in that the filter cloth is placed in the part of the filter space with the greater section, with the filtering surfaces parallel to the direction of flow of the flue gas in that section, while vertically below said part with larger section the bottom side of the filter space is provided with an opening which opens into a collection tray or onto a conveyor for the dust particles falling down, and the bottom wall of the filter is directed downwards at an angle towards said opening, so that particles coming down onto this part of the bottom side glide down on this sloping wall and fall into the opening.

The flue gas filter according to the invention is also characterized in that the part of the filter lying above the filter cloth is provided with an outlet opening which can be connected to the chimney, while at the level of the inlet opening provision is made for an opening leading directly into the pipe connected to the outlet opening of the filter, and a valve in one position connects the inlet opening directly to said opening leading into the outlet pipe, and thereby shuts off further access to the filter space, while in its other position it connects the inlet opening of the filter to the filter space while the opening leading directly into the outlet pipe remains shut off.

In order to clarify the invention, a possible embodiment of a flue gas filter according to the invention is introduced in the description which follows, without the invention being thereby restricted to this embodiment.

The description which follows is illustrated with reference to the following figures.

Figure 1 shows a side view in perspective of the flue gas filter according to the invention, the main internal parts being indicated by dotted lines.

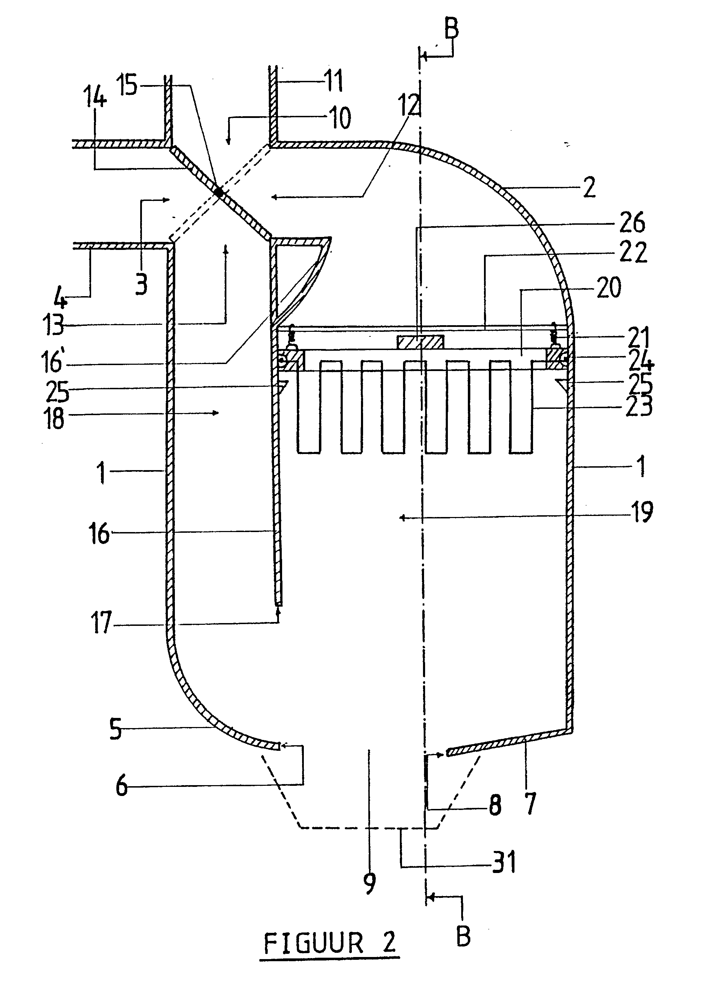

Figure 2 is a side view of a longitudinal section along the axis AA in Figure 3 (at right angles to the direction of the partition) of the complete flue gas filter according to the invention.

Figure 3 is a side view of a cross-section along the axis BB in Figure 2 (parallel to the direction of the partition) of the complete flue gas filter according to the invention.

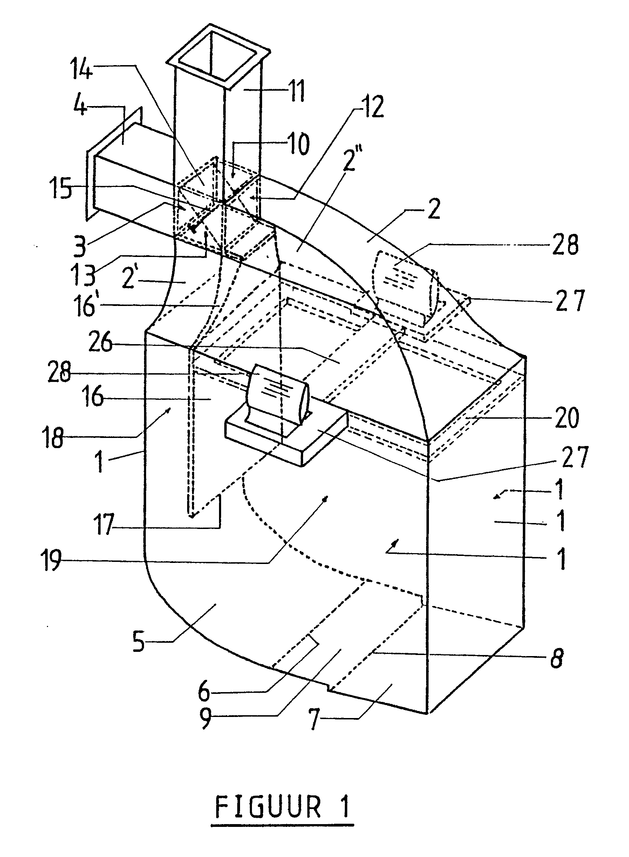

Figure 1 shows in perspective the flue gas filter according to the invention, in a preferred embodiment, which is characterized in that it comprises a bar-shaped space with four vertical side walls (1) and provided with a top part with curved walls (2) and (2') forming a space which narrows upwards, and which in the narrowest top part is bounded laterally by the two vertical parallel walls (2''), and in the vertical front side, in the top narrowest part thereof, is provided with a vertical square inlet opening (3) with a connecting pipe (4), also with square cross-section. In the curved top side (2'), in the highest horizontal part thereof, is a horizontal and square outlet opening (10), connected to a vertical connecting pipe (11), also with square cross-section. This opening (10) is positioned in such a way that it rests with one side against the vertical inlet opening (3), forming a right angle therewith. The bottom side of the bar-shaped space enclosed by vertical side walls (1) comprises, on the one hand, a wall (5) curved as part of a cylindrical surface, and running from the full width of the bottom side of the vertical wall (1) along the edge of the inlet opening (3) (the front side), and ending in the lowest point with a straight board (6), in a direction at right angles to the two vertical side walls (1) abutting against the curved wall (5). On the other hand, the bottom side of the space enclosed by vertical walls (1) comprises a slightly downward sloping, rectangular wall (7), running over the entire width of the bottom side of the vertical wall (1) lying directly opposite the wall (1) in which the inlet opening (3) is provided, and also ending with a straight board (8), parallel to the board (6), in the lowest point. This consequently produces a bottom part of the space enclosed by vertical side walls (1) which, on the one hand, is shut off laterally by two vertical walls (1) and, on the other hand, has a vertical wall ending cylindrically curved in a lowest point with a board (5) and another vertical wall (1) abutting a flat, downward-sloping face (7) ending in a lowest point with a board (8). This produces a rectangular opening (9) in the bottom side of the space. (The downward sloping flat wall (7) can be omitted if desired in another embodiment according to the invention.)

Situated directly opposite the inlet opening (3) is the outlet opening (12) covering the entire width of the space shut off at that point along the top and along the side varying directly opposite the opening (12) by the curved walls (2), and along the front and along the back by the vertical wall parts (2'').

Situated vertically below the outlet opening (10) is the inflow opening (13), in a horizontal position and with one side abutting against the bottom side of the vertical outflow opening (12), forming a right angle therewith, and with the side lying directly opposite this side and abutting against the bottom side of the vertical inlet opening (3), at a right angle. The other two sides of this inflow opening (13) are formed by the top side of the curved narrowing walls (2') enclosing the space along the side edges.

The four square openings (3), (10), (12) and (13), which are situated in such a way that they each have two sides which connect to two other openings, while forming a right angle with said other two openings, lie in pairs directly opposite each other.

These openings are connected to each other by means of a valve (14) with rectangular surface, pivoting about an axis (15) through its axis of symmetry which lies parallel to the connecting side of the different openings. The axis (15) is fixed here in the part of the two vertical walls (2'') lying in line with the walls of the connecting pipe (11).

In one position of the valve (14), in which the rectangular valve abuts with its one side against the top side of the inlet valve (3) and abuts with its other side against the bottom side of the outflow opening (12), the inlet opening (3) and the inflow opening (13) are connected, on the one hand, and the outflow opening (12) is connected to the outlet opening (10), on the other, so that the flue gases flowing in through the inlet opening (3) are forced to flow through the filter.

In the other position of the valve (14), in which the rectangular valve (15) abuts with one side against the bottom side of the inlet opening (3) and with the other side against the top side of the outflow opening (12), the inlet opening (3) and the outlet opening (10) are connected, on the one hand, and the inflow opening (13) and the outflow opening (12) are connected, on the other, so that the flue gases are conveyed directly to the chimney without being able to go into the filter space.

The flue gas filter according to the invention is further characterized in that it is provided in the inside of the enclosed space with a vertical partition (16) which divides the space over a specific height, beginning from the top, into a small space (18) and a large space (19).

The partition (16) extends vertically downwards from the bottom side of the outflow opening (12) and at right angles to the curved side walls (2') lying directly opposite each other and to which it connects and, further down, at right angles to the vertical side walls (1) lying directly opposite each other, also connecting thereto. The partition (16) has a thick top part (16') which narrows downwards and is widest at the bottom side of the outflow opening (12), and towards the bottom merges into the partition (16) in the form of a flat sheet.

The partition (16) ends with a horizontal edge (17) at such a distance from the bottom side (5) of the space that the connecting opening between the small space (18) and the large space (19) provides a flow opening which is at least as large as the flow opening in the smaller space (18).

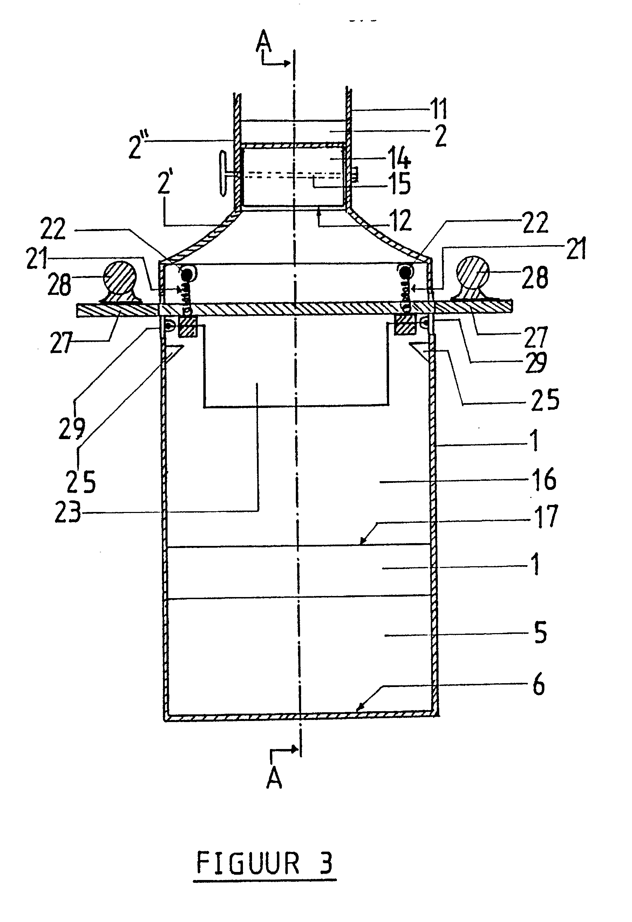

The flue gas filter according to the invention is also characterized in that a suspension frame (20) is provided over the entire flow surface of the larger space (19) for suspending the filter cloth (23) by known fitting methods (in vertical planes or cylindrical surfaces parallel to the direction of flow of the flue gases). The frame (20) (see Figure 3) lies a short distance from the walls (1) all the way round, and the partition (16) is suspended from four vertical springs (21) each with a hook-shaped end engaging on either side of the frame in an upward-projecting opening connected to the frame, in each corner thereof. The springs (21) are in turn hooked onto two full pipes (22) which are provided for them and are fixed to the vertical wall (1) running parallel to the partition (16) along their one end and the partition (16) along their other end.

The frame (20) then contains the filter cloth (23) which is set up vertically (in the figures disposed along vertical planes running parallel to the partition) and is connected laterally to the walls (1) lying around it and to the partition (16) by means of elastic or pivoting connecting elements (24) provided with a sealing fabric in order to counteract loss.

For setting up of the filter cloth along vertical planes, provision is made inside the frame (20) for a grid comprising parallel faces which are connected alternately to each other at the top and bottom, in order to obtain a continuous vertical upgoing and downgoing grid face which is to have the filter cloth stretched over it, according to a known embodiment.

Supporting elements (25) are provided below the frame (20), all the way round or at certain points, for catching the frame if a spring breaks, and for mounting the system.

The flue gas filter according to the invention is further characterized in that a bar (26) lies horizontally, resting on the frame (20) and projecting through the walls (1), which through openings (29) lie at right angles to the direction of the partition (16), the laterally projecting parts (27) of said bar being flat and having enough surface and being sturdy enough to bear a vibrating motor (28).

The openings (29) through which the bar (26) projects are sealed with sealing pieces (30) of elastic material, abutting against the walls (1), on the one hand, and the top and bottom sides of the outward- projecting bar (26), on the other.

The flue gas filter according to the invention is set up and used by connecting the connecting pipe (4) to the flue gas-producing plant, and connecting the connecting pipe (11) to the chimney. Then setting the valve (14) in the position which connects the inlet opening (3) to the inflow opening (13) and the outflow opening (12) to the outflow opening (10) causes the flue gases to be guided through the filter, and the polluting dust particles remain behind on the filter cloth (23).

For cleaning of the filter cloth all that is needed is to start up the vibrating motors (28) (which can take place continuously), as a result of which via the parts (27) (on which the motors (28) are situated) the bar (26) begins to vibrate and transmits this vibration to the frame (20), which through its suspension from the springs (21) also starts to vibrate, causing this motion to be transmitted to the filter cloth, so that the dust particles stuck to the filter cloth (23) are shaken off it. The strength of the vibration (frequency, amplitude, ...) can be made regulable if desired by using a known device on the vibrating motors for regulation of the vibrations. The vibrating motors can also be switched on and off automatically by means of a known unit (at certain intervals) or manually (with a switch).

A collection tray (31), which can be replaced if necessary by a continuous discharge system (conveyor belt, for example), is placed below the opening (9) in the bottom side of the flue gas filter.

The way in which the flue gas filter works is that the flue gases undergo a great decrease in velocity at the transmition from the smaller space (18) to the larger space (19), due to the widening of the flow opening. Combined with a direction change, the result of this is that the heaviest particles fall down onto the bottom side of the filter, and from there slip into the opening (9), or fall directly into the opening (9), under which there is a collection tray (31) or a discharge device.

The advantages of the flue gas filter according to the invention are derived, on the one hand, from the slowing down of the flue gases, so that fewer dust particles (only the light particles) go against the filter cloth at a lower speed. The important consequence of this is that the surface area of the filter cloth which has to be provided is much smaller, with the result that the dimensions of the filter have therefore become much smaller (about 20 times smaller). The flue gas filters according to the invention are consequently lower in price. Another advantage derived from the above-mentioned slowing down is that the fan will have less of a pressure loss to overcome and can therefore be chosen less powerful, which again reduces the cost and the energy consumption.

Further advantages of the flue gas filter according to the invention follow from the use of a vibrating mechanism for cleaning the filter cloth, as a result of which the cleaning can be carried out very effectively without stopping the flue gas-producing plant (unlike manual cleaning), and without interrupting the filtering action of part of the filter cloth (contrasting with the use of compressed air), as a result of which through very regular or continuous cleaning again far less filter cloth is needed and less pressure loss is suffered, and consequently a smaller filter with less filter cloth and a less powerful fan are needed.

The filter cloth can thus be used continuously in an optimum condition, and no caking consequently occurs on the filter cloth.

Another advantage of the flue gas filter according to the invention is that the flue gases can be conveyed out with only one valve, and without additional pipe, so that the filter can be put out of action without shutting down the flue gas-producing plant.

Another additional advantage of the flue gas filter according to the invention is that through use thereof, combined with smoke scrubbing, it is possible through regulation of the vibrating motors to determine the thickness of the layer of lime remaining behind on the filter cloth and still partially active, so that the reaction time of the chlorine and heavy metals passing through it can be regulated as desired.

## Claims

1. Flue gas filter, comprising a filter chamber in which a filter element is disposed in such a way that the flue gases entering through an inlet and propelled along have to flow through the filter element in order to reach the outlet, the flue gases having to describe a bend on entering the chamber, **characterized in that** said flue gas filter is provided with a partition (16) which is disposed in the filter chamber and extends from the top side over the entire width of the filter chamber, dividing the filter chamber into a space (18) with small flow section which is equal over the entire height and a space (19) with larger flow section, said partition (16) ending with an edge (17) at a distance from the bottom side (5) of the filter chamber, so that the small space (18) and the large space (19) are connected to each other by means of a flow opening for the flue gas, with a flow section which is at least as large as the flow section of the smaller space (19), so that the flue gas can flow without pressure loss through the inlet and the small space (18) separated from the filter chamber by the partition (16) to the space (19) in which the filter element is disposed.

2. Flue gas filter, **characterized in that** the suspension frame (20) for the filter cloth (23) has on it a bar (26) with at least one part (27) projecting through an opening (29) in a side wall (1) of the filter, on which part a vibrating motor (28) rests.

3. Flue gas filter according to Claim 2, **characterized in that** it is also equipped with a suspension frame for the filter cloth (20) which is suspended from at least one spring (21).

4. Flue gas filter according to any of Claims 2 and 3, **characterized in that** the filter cloth (23) which is fixed on the suspension frame (20) is also fixed all the way round laterally to the walls (1) and partition (16) by a pivoting or elastic connection (24) provided with a sealing fabric.

5. Flue gas filter according to any of Claims 2 to 4, **characterized in that** supporting elements (25) are provided under the suspension frame (20).

6. Flue gas filter according to any of Claims 2 to 5, **characterized in that** each spring (21) on which the suspension frame (20) hangs, is hooked to a full pipe (22) intersecting the space with larger section (19).

7. Flue gas filter according to any of the preceding claims, **characterized in that** a discharge opening (10) is provided directly above the filter inlet (13) and a supply opening (3) is located directly in front of the filter outlet (12), so that we have four openings lying in pairs opposite each other, every two openings having a common side, and each opening forming a right angle with the two adjacent openings, and a rectangular valve (14) being disposed centrally relative to these four openings in such a way that it is rotatable about an axis (15), so that in a first diagonal position of the valve (14) the opening 3 becomes connected to the filter inlet (13) and the filter outlet (12) to the discharge opening (10), and in a second diagonal position of the valve (14) the supply opening (3) and the discharge opening (10), on the one hand, become connected to the filter inlet and the filter outlet, on the other.

8. Method for filtering flue gases scrubbed with lime, making use of a flue gas filter according to any of Claims 2 to 7, **characterized in that** through regulation of the vibrations of the vibrating motor (28) it becomes possible to determine the thickness of a lime layer on the filter cloth (23) and thus to obtain a regulable reaction time for the lime with substances occurring in the flue gases which are flowing through the filter cloth.

FIGUUR 1

FIGUUR 2

FIGUUR 3